(19) **Europäisches Patentamt / European Patent Office / Office européen des brevets**

(11) **EP 1 592 527 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **04762337.6**

(22) Anmeldetag: **02.07.2004**

(51) Int Cl.:
**B23B 1/00** (2006.01)

(86) Internationale Anmeldenummer:
**PCT/DE2004/001411**

(87) Internationale Veröffentlichungsnummer:
**WO 2005/005082 (20.01.2005 Gazette 2005/03)**

(54) **VERFAHREN UND VORRICHTUNG ZUM FRÄSEN VON FREIFORMFLÄCHEN**

METHOD AND DEVICE FOR MILLING FREEFORM SURFACES

PROCEDE ET DISPOSITIF POUR FRAISER DES SURFACES DE FORME LIBRE

(84) Benannte Vertragsstaaten:
**DE FR GB**

(30) Priorität: **08.07.2003 DE 10330828**

(43) Veröffentlichungstag der Anmeldung:
**09.11.2005 Patentblatt 2005/45**

(73) Patentinhaber: **MTU Aero Engines GmbH**
**80995 München (DE)**

(72) Erfinder: **GLÄSSER, Arndt**
**85221 Dachau (DE)**

(56) Entgegenhaltungen:
**EP-A- 0 484 539          US-A- 5 563 484**

- **PATENT ABSTRACTS OF JAPAN Bd. 016, Nr. 281 (P-1375), 23. Juni 1992 (1992-06-23) & JP 04 074205 A (FANUC LTD), 9. März 1992 (1992-03-09)**

Printed by Jouve, 75001 PARIS (FR)

**Beschreibung**

Die Erfindung betrifft ein Verfahren zum Fräsen von Freiformflächen nach dem Oberbegriff des Patentanspruchs 1. Des weiteren betrifft die Erfindung eine Vorrichtung zum Fräsen von Freiformflächen nach dem Oberbegriff des Patentanspruchs 6.

Die hier vorliegende Erfindung betrifft das Gebiet der Frästechnik, insbesondere das HSC-Fräsen (High Speed Cutting Fräsen), welches auch als HPC-Fräsen (High Performance Cutting Fräsen) bezeichnet wird.

Beim Fräsen von Freiformflächen wird ein Werkzeug, ein sogenannter Fräser, relativ zum Werkstück bewegt. Beim Fräsen unterliegt das Werkzeug, nämlich der Fräser, einem Verschleiß, wodurch in gewissen Intervallen ein Austausch des Fräsers oder ein Nachschleifen desselben erforderlich wird. Hierbei können sich Abmessungsänderungen am Werkzeug bzw. Fräser einstellen. Die Berücksichtigung bzw. den Ausgleich von Abmessungsabweichungen bzw. Abmessungsänderungen des Fräsers beim Fräsen bezeichnet man als Radiuskorrektur bzw. Fräser-Radiuskorrektur.

Aus dem Stand der Technik sind Fräsmaschinen bzw. NC-Steuerungen für Fräsmaschinen bekannt, die eine solche Fräser-Radiuskorrektur beim 3-Achsfräsen ermöglichen. Beim 3-Achsfräsen wird der Fräser in drei translatorischen Achsen relativ zum zu bearbeitenden Werkstück bewegt. Wird eine derartige Fräser-Radiuskorrektur beim 3-Achsfräsen durchgeführt, so handelt es sich um eine 2D-Radiuskorrektur.

Komplexe Freiformflächen, wie sie z.B. bei der Fertigung von Rotoren mit integraler Beschaufelung auftreten, müssen jedoch mit Hilfe des sogenannten 5-Achsfräsens durchgeführt werden, d.h. neben der Bewegung des Fräsers entlang der drei translatorischen Achsen ist eine Bewegung desselben entlang von zwei rotatorischen Achsen erforderlich. Nach dem Stand der Technik ist es bislang nicht möglich, eine Radiuskorrektur-Funktion beim 5-Achsfräsen zu nutzten.

US 5,563,484 offenbart ein Fräsverfahren zur Herstellung einer zylindrischen Oberfläche eines zylindrischen Werkstücks, bei dem die Werkzeugposition durch einen Korrekturvektor korrigiert wird, damit der Fräser immer den richtigen Winkel zur zylindrischen Oberfläche aufweist. Hierbei wird für jeden Stützpunkt der Werkzeugbahn ein Werkzeugvektor in Form von Vorlaufwinkeln und Anstellwinkeln definiert. Weiterhin wird für jeden Stützpunkt aus den Vorlaufwinkeln und Anstellwinkeln sowie aus einem für jeden Stützpunkt ermittelten Drivevektor ein Normalenvektor bestimmt, wobei der Drivevektor den Richtungsverlauf der Stützpunktbahn im Stützpunkt definiert. Der Normalenvektor in jedem Stützpunkt der Werkzeugbahn wird für eine 3D-Radiuskorrektur zum Ausgleich von Abmessungsabweichungen des Fräsers verwendet.

Eine 3D-Radiuskorrektur zum Ausgleich von Abmessungsabweichungen des Fräsers ist mit diesen Verfahren jedoch nicht möglich.

Hiervon ausgehend liegt der vorliegenden Erfindung das Problem zu Grunde, ein neuartiges Verfahren zum Fräsen von Freiformflächen sowie eine entsprechende Vorrichtung zu schaffen.

Dieses Problem wird dadurch gelöst, dass das eingangs genannte Verfahren zum Fräsen von Freiformflächen durch die Merkmale des kennzeichnenden Teils des Patentanspruchs 1 weitergebildet ist.

Zur Ermittlung des Normalenvektors für jeden Stützpunkt wird erfindungsgemäß in einem ersten Schritt der Werkzeugvektor des jeweiligen Stützpunkts um den entsprechenden Drivevektor um den Betrag des jeweiligen Anstellwinkels zurückgedreht, wobei dies einen ersten Zwischenvektor für den jeweiligen Stützpunkt ergibt. Nachfolgend wird in einem zweiten Schritt das Kreuzprodukt aus ersten Zwischenvektor des jeweiligen Stützpunkts und dem Drivevektor des jeweiligen Stützpunkts gebildet, wobei dieses Kreuzprodukt einen zweiten Zwischenvektor für den Stützpunkt ergibt. Anschließend wird in einem dritten Schritt der erste Zwischenvektor des jeweiligen Stützpunkts um den zweiten Zwischenvektor des jeweiligen Stützpunkts um den Betrag des jeweiligen Vorlaufwinkels zurückgedreht, wobei dies den Normalenvektor für den Stützpunkt ergibt.

Mit Hilfe der hier vorgeschlagenen Erfindung ist es erstmals möglich, beim 5-Achsfräsen eine Radiuskorrektur, nämlich eine 3D-Radiuskorrektur, durchzuführen.

Die erfindungsgemäße Vorrichtung ist durch die Merkmale des Patentanspruchs 6 gekennzeichnet.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:

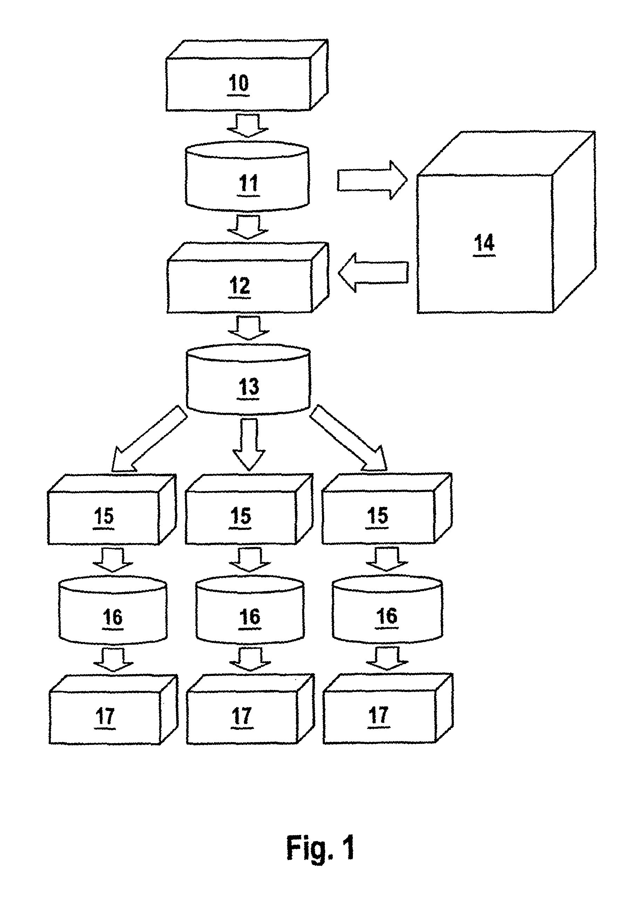

Fig. 1:   ein stark schematisiertes Blockschaltbild einer erfindungsgemäßen Vorrichtung zum Fräsen von Freiformflächen.

Nachfolgend wird die hier vorliegende Erfindung unter Bezugnahme auf die Figuren in größerem Detail erläutert. Bevor jedoch die Details des erfindungsgemäßen Verfahrens sowie der erfindungsgemäßen Vorrichtung dargestellt werden, sollen nachfolgend einige Begriffe definiert werden, auf die später Bezug genommen wird.

Bei der Fräsbearbeitung eines zu bearbeitenden Werkstücks soll sich an der Oberfläche des Werkstücks eine gewünschte dreidimensionale Geometrie einstellen. Diese gewünschte dreidimensionale Geometrie an der Oberfläche des Werkstücks wird auch als Freiformfläche bezeichnet.

Die Fräsbearbeitung des zu bearbeitenden Werkstücks erfolgt mithilfe eines Werkzeugs, einem sogenannten Fräser. Zur Bearbeitung des Werkstücks wird das Werkzeug bzw. der Fräser relativ zum Werkstück bewegt. Die Bewegung des Werkzeugs bzw. Fräsers relativ zum Werkstück wird durch sogenannte Werkzeugkoordinaten beschrieben, wobei die Werkzeugkoordinaten die Position einer Werkzeugspitze bzw. eines Werkzeugbezugspunkt definieren. Die Bewegung der Werkzeugspitze bzw. des Werkzeugbezugspunkts bei der Fräsbearbeitung des Werkstücks bezeichnet man als Werkzeugbahn bzw. Fräsbahn. Die Werkzeugbahnen werden in einem CAD/CAM-System in Form von Stützpunkten definiert.

Ausgehend von der Werkzeugspitze bzw. dem Werkzeugbezugspunkt erstreckt sich ein Vektor entlang einer Werkzeugachse bzw. eines Werkzeugschaftes des Werkzeugs bzw. Fräsers. Dieser Vektor entlang der Werkzeugachse ausgehend von der Werkzeugspitze in Richtung des Werkzeugschaftes bezeichnet man als Werkzeugvektor.

Die Fräsbearbeitung eines Werkstücks zur Ausbildung einer definierten dreidimensionalen Freiformfläche erfolgt mithilfe eines sogenannten 5-Achsfräsens. Beim 5-Achsfräsen kann das Werkzeug in fünf Achsen relativ zum zu bearbeitenden Werkstück bewegt werden. Drei Achsen dienen der linearen Relativbewegung des Werkzeugs relativ zum Werkstück, so dass jeder Punkt im Raum angefahren werden kann. Zusätzlich zu dieser linearen Bewegung entlang der sogenannten Linearachsen ist das Werkzeug zur Realisierung von Hinterschneidungen auch um eine Schwenkachse sowie eine Kippachse bewegbar. Entlang der Schwenkachse sowie der Kippachse werden rotatorische Bewegungen des Werkzeugs ermöglicht. Hierdurch ist es möglich, dass alle Punkte im Raum ohne Kollision angefahren werden können. Die Schwenkachse sowie die Kippachse werden häufig auch allgemein mit Rundachsen bezeichnet.

Es liegt nun im Sinne der hier vorliegenden Erfindung, ein Verfahren sowie eine Vorrichtung zum 5-Achsfräsen von Freiformflächen vorzuschlagen, wobei in jedem Stützpunkt der oder jeder Werkzeugbahn eine 3D-Radiuskorrektur zum Ausgleich von Abmessungsabweichungen bzw. Abmessungsänderungen des Fräsers durchgeführt wird. Hierzu wird für jeden Stützpunkt jeder Werkzeugbahn ein Werkzeugvektor in Form von Vorlaufwinkeln und Anstellwinkeln definiert. Weiterhin wird für jeden Stützpunkt einer jeden Werkzeugbahn ein Drivevektor des Fräsers ermittelt, der den Richtungsverlauf der Stützpunktbahn im Stützpunkt definiert. Aus den obigen Größen, nämlich den Vorlaufwinkeln, den Anstellwinkeln und den Drivevektoren, wird für jeden Stützpunkt jeder Werkzeugbahn ein Normalenvektor ermittelt. Auf Grundlage dieses Normalenvektors, der für jeden Stützpunkt vorliegt, kann eine 3D-Radiuskorrketur durchgeführt werden.

Im Sinne des hier vorliegenden, erfindungsgemäßen Verfahrens wird demnach eine spezielle Form gewählt, um die Werkzeugvektoren zu definieren. Diese Form zur Definition der Werkzeugvektoren nutzt Vorlaufwinkel und Anstellwinkel aus. Weiterhin wird im Sinne der Erfindung aus diesen Winkeln und Drivevektoren, die unter Ausnutzung der Stützpunkte der Werkzeugbahnen ermittelt werden, eine Größe abgeleitet, nämlich der Normalenvektor, die einer 3D-Radiuskorrektur-Funktion als Eingangsgröße bereitgestellt wird, und die von einer 3D-Radiuskorrektur-Funktion verarbeitet werden kann. Aufgrund der Erfindung wird es erstmals möglich 3D-Radiuskorrekturen beim 5-Achsfräsen auszuführen.

Wie bereits erwähnt, wird für jeden Stützpunkt der oder jeder Werkzeugbahn der Werkzeugvektor in Form von Vorlaufwinkeln und Anstellwinkeln definiert. Des weiteren wird für jeden Stützpunkt ein Drivevektor ermittelt.

Nach einer ersten Ausführungsform des Verfahrens wird in jedem Stützpunkt der Werkzeugbahn der entsprechende Drivevektor dadurch ermittelt, dass ein Vektor durch den entsprechenden Stützpunkt und einen benachbarten Stützpunkt gelegt wird. Für den ersten Stützpunkt einer jeden Werkzeugbahn wird der Drivevektor dadurch ermittelt, dass ein Vektor durch den ersten Stützpunkt und den in Bewegungsrichtung nächst vorn liegenden Stützpunkt, also den zweiten Stützpunkt der Werkzeugbahn, gelegt wird. Für jeden weiteren Stützpunkt der Werkzeugbahn wird der Drivevektor dadurch ermittelt, dass ein Vektor durch den Stützpunkt und den in Bewegungsrichtung nächst hinten liegenden Stützpunkt gelegt wird.

Würde man mit DV die Drivevektoren und mit SP die Stützpunkte der Werkzeugbahn bezeichnen, wobei die Werkzeugbahn n Stützpunkte aufweist, so würde demnach gelten:

$$DV_{SPi} = f(SP_i, SP_{i+1}), \text{ für } i = 1;$$

$$DV_{SPi} = f(SP_i, SP_{i-1}), \text{ für } i = 2, 3, \dots, n.$$

Alternativ können die Drivevektoren für die Stützpunkte auch dadurch ermittelt werden, dass durch alle Stützpunkte einer Werkzeugbahn ein Spline gelegt wird. Die erste Ableitung des Splines in jedem der Stützpunkte entspricht dann dem Drivevektor des entsprechenden Stützpunkts.

Nach der Ermittlung der Drivevektoren liegt also für jeden Stützpunkt einer Werkzeugbahn ein Werkzeugvektor definiert in Vorlaufwinkel und Anstellwinkel sowie ein Drivevektor vor. Dann kann aus den Vorlaufwinkeln, Anstellwinkeln und Drivevektoren für jeden Stützpunkt ein Normalenvektor bestimmt werden.

Die Bestimmung des Normalenvektors für jeden Stützpunkt erfolgt dadurch, dass in einem ersten Schritt der Werkzeugvektor des jeweiligen Stützpunkts um den entsprechenden Drivevektor um den Betrag des jeweiligen Anstellwinkels zurückgedreht wird, wobei dies einen ersten Zwischenvektor für den jeweiligen Stützpunkt ergibt. Nachfolgend wird in einem zweiten Schritt das Kreuzprodukt aus ersten Zwischenvektor des jeweiligen Stützpunkts und dem Drivevektor des jeweiligen Stützpunkts gebildet, wobei dieses Kreuzprodukt einen zweiten Zwischenvektor für den Stützpunkt ergibt. Anschließend wird in einem dritten Schritt der erste Zwischenvektor des jeweiligen Stützpunkts um den zweiten Zwischenvektor des jeweiligen Stützpunkts um den Betrag des jeweiligen Vorlaufwinkels zurückgedreht, wobei dies den Normalenvektor für den Stützpunkt ergibt. Als Resultat ergibt sich dann der Normalenvektor für den entsprechenden Stützpunkt. Dieser Normalenvektor wird als Eingangsgröße für die 3D-Radiuskorrektur verwendet.

An dieser Stelle sei darauf hingewiesen, dass bei der Definition der Werkzeugvektoren über die Vorlaufwinkel und Anstellwinkel ebenfalls die Lage des Fräser bezogen auf das zu bearbeitende bzw. zu fräsende Bauteil definiert wird. Abhängig davon, ob der Fräser links oder rechts am zu fräsenden Bauteil anliegt, bestimmt sich das Vorzeichen für Vorlaufwinkel und Anstellwinkel.

Es sei nochmals darauf hingewiesen, dass im Sinne der Erfindung die Werkzeugvektoren unter Verwendung von Vorlaufwinkeln und Anstellwinkeln definiert werden. Es ist eine Erkenntnis der hier vorliegenden Erfindung, dass ausschließlich bei einer Definition der Werkzeugvektoren in Form von Vorlaufwinkeln und Anstellwinkeln eine geeignete Eingangsgröße, nämlich der Normalenvektor, für die 3D-Radiuskorrektur-Funktion ermittelt werden kann. Andere Methoden zur Definition von Werkzeugvektoren, nämlich konstante Werkzeugvektoren bzw. interpolierte Werkzeugvektoren, sind nicht geeignet.

Fig. 1 zeigt ein stark schematisiertes Blockschaltbild einer erfindungsgemäßen Vorrichtung zum Fräsen von Freiformflächen nach dem eben beschriebenen Verfahren. Die erfindungsgemäße Vorrichtung umfasst im gezeigten Ausführungsbeispiel eine Programmiereinrichtung 10 zur Programmierung mindestens einer Werkzeugbahn bzw. Fräsbahn eines Fräswerkzeugs über Stützpunkte. Das Werkzeug bzw. der Fräser ist entlang dieser in der Programmiereinrichtung 10 definierten Werkzeugbahnen relativ zum Werkstück bewegbar.

Bei der ersten Programmiereinrichtung 10 handelt es sich um ein CAD/CAM-System. In diesem CAD/CAM-System sind die Werkzeugbahnen bzw. Fräsbahnen des Werkzeugs bzw. die Werkzeugvektoren über Vorlaufwinkel und Anstellwinkel programmierbar. Das CAD/CAM-System erzeugt ein sogenanntes APT (Automatic Programming Tool)-File 11, wobei ein APT-Prozessor 12 aus dem APT-File 11 ein maschinenunabhängiges Steuerungsfile 13 für die Fräsbearbeitung des Werkstücks erzeugt.

Der Programmiereinrichtung 10 sind Mittel zur Umrechnung 14 zugeordnet, um für jeden Stützpunkt einen Drivevektor und einen Normalenvektor zu bestimmen. Dies erfolgt auf die oben beschrieben Art und Weise. Die Mittel zur Umrechnung 14 bestimmen aus dem ATP-File 11 für jeden Stützpunkt der Werkzeugbahn den Drivevektor und den Normalenvektor, wobei die Mittel zur Umrechnung 14 den Normalenvektor in Form von ATP-Daten bereitstellen. Diese ATP-Daten werden an den APT-Prozessor 12 übergeben und in das maschinenunabhängige Steuerungsfile 13 integriert.

Aus dem Steuerungsfile 13 werden mithilfe sogenannter Postprozessoren 15 sogenannten NC-Daten 16 erzeugt, die maschinenabhängig sind und der Steuerung der einzelnen Bewegungsachsen der NC-Maschine 17, also der Fräsmaschine, dienen. Die im Steuerungsfile 13 enthaltenen Daten der Normalenvektoren liegen auch in den NC-Daten 16, wobei diese Daten der Normalenvektoren einer in die NC-Maschine 17 integrierten 3D-Radiuskorrektur-Einrichtung übergeben werden, welche die 3D-Radiuskorrektur ausführt.

Mithilfe des erfindungsgemäßen Verfahrens sowie der erfindungsgemäßen Vorrichtung lässt sich das Fräsen von Freiformflächen erheblich verbessern. So ist es mithilfe der Erfindung erstmals möglich, bei einer fünfachsigen Fräsbewegung eine 3D-Radiuskorrektur zu verwenden.

Die erfindungsgemäße Vorrichtung sowie das erfindungsgemäße Verfahren eigenen sich besonders für die Fräsbearbeitung von rotationssymmetrischen Turbinenbauteilen mit integraler Beschaufelung, d.h. von sogenannten Blisks (Bladed Disks) oder Blings (Bladed Rings).

## Patentansprüche

1. Verfahren zum Fräsen von Freiformflächen an Werkstücken, insbesondere zum 5-Achsfräsen, wobei ein Werkstück von einem Werkzeug bzw. einem Fräser derart gefräst wird, dass sich eine gewünschte Freiformfläche ergibt, und wobei das Werkzeug zum Fräsen entlang mindestens einer über Stützpunkte definierten Werkzeugbahn bzw. Fräsbahn relativ zum Werkstück bewegt wird, wobei für jeden Stützpunkt der Werkzeugbahn ein Werkzeugvektor in Form von Vorlaufwinkeln und Anstellwinkeln definiert wird, sowie für jeden Stützpunkt aus den Vorlaufwinkeln und Anstellwinkeln sowie aus einem für jeden Stützpunkt ermittelten Drivevektor ein Normalenvektor bestimmt wird, wobei der Drivevektor den Richtungsverlauf der Stützpunktbahn im Stützpunkt definiert und der Normalenvektor in jedem Stützpunkt der Werkzeugbahn für eine 3D-Radiuskorrektur zum Ausgleich von Abmessungsabweichungen des Fräsers verwendet wird, **dadurch gekennzeichnet, dass** zur Ermittlung des Normalenvektors für jeden Stützpunkt in einem ersten Schritt der Werkzeugvektor des jeweiligen Stützpunkts um den entsprechenden Drivevektor um den Betrag des jeweiligen Anstellwinkels zurückgedreht wird, wobei dies einen ersten Zwischenvektor für den jeweiligen Stützpunkt ergibt und nachfolgend in einem zweiten Schritt das Kreuzprodukt aus dem ersten Zwischenvektor des jeweiligen Stützpunkts und dem Drivevektor des jeweiligen Stützpunkts gebildet wird, wobei dieses Kreuzprodukt einen zweiten Zwischenvektor für den Stützpunkt ergibt und daran anschließend in einem dritten Schritt der erste Zwischenvektor des jeweiligen Stützpunkts um den zweiten Zwischenvektor des jeweiligen Stützpunkts um den Betrag des jeweiligen Vorlaufwinkels zurückgedreht wird, wobei dies den Normalenvektor für den Stützpunkt ergibt.

2. Verfahren nach Anspruch 1, **dadurch gekennzeichnet, dass** in jedem Stützpunkt der Werkzeugbahn der entsprechende Drivevektor **dadurch** ermittelt wird, dass ein Vektor durch den Stützpunkt und einen benachbarten Stützpunkt gelegt wird.

3. Verfahren nach Anspruch 2, **dadurch gekennzeichnet, dass** für den ersten Stützpunkt der Werkzeugbahn der Drivevektor **dadurch** ermittelt wird, dass ein Vektor durch den ersten Stützpunkt und den in Bewegungsrichtung nächst vorn liegenden Stützpunkt gelegt wird.

4. Verfahren nach Anspruch 3, **dadurch gekennzeichnet, dass** für jeden weiteren Stützpunkt der Werkzeugbahn der Drivevektor **dadurch** ermittelt wird, dass ein Vektor durch den Stützpunkt und den in Bewegungsrichtung nächst hinten liegenden Stützpunkt gelegt wird.

5. Verfahren nach Anspruch 1, **dadurch gekennzeichnet, dass** in jedem Stützpunkt der Werkzeugbahn der entsprechende Drivevektor **dadurch** ermittelt wird, dass durch alle Stützpunkte der Werkzeugbahn ein Spline gelegt wird, wobei die erste Ableitung des Splines in einem Stützpunkt dem Drivevektor des entsprechenden Stützpunkts entspricht.

6. Vorrichtung zum Fräsen von Freiformflächen an Werkstücken, insbesondere 5-Achsfräsvorrichtung, wobei ein Werkzeug bzw. ein Fräser ein Werkstück derart fräst, dass sich eine gewünschte Freiformfläche ergibt, mit einer Programmiereinrichtung (10) zur Programmierung mindestens einer Werkzeugbahn bzw. Fräserbahn durch Stützpunkte, wobei das Werkzeug zum Fräsen entlang der oder jeder Werkzeugbahn relativ zum Werkstück bewegbar ist, wobei in der Programmiereinrichtung (10) für jeden Stützpunkt der Werkzeugbahn ein Werkzeugvektor in Form von Vorlaufwinkeln und Anstellwinkeln programmierbar ist, und der Programmiereinrichtung (10) Mittel zur Umrechnung (14) zugeordnet sind, um für jeden Stützpunkt aus den Vorlaufwinkeln und Anstellwinkeln sowie aus einem für jeden Stützpunkt ermittelten Drivevektor einen Normalenvektor zu bestimmen, wobei der Drivevektor den Richtungsverlauf der Stützpunktbahn definiert und der Normalenvektor jedes Stützpunkts der Werkzeugbahn an eine 3D-Radiuskorrektur-Einrichtung zum Ausgleich von Abmessungsabweichungen des Fräsers übergeben wird, **dadurch gekennzeichnet, dass** die Mittel zur Umrechnung (14) zur Ermittlung des Normalenvektors für jeden Stützpunkt in einem ersten Schritt den Werkzeugvektor des jeweiligen Stützpunkts um den entsprechenden Drivevektor um den Betrag des jeweiligen Anstellwinkels drehen, was einen ersten Zwischenvektor für den jeweiligen Stützpunkt ergibt und nachfolgend das Kreuzprodukt aus dem erstem Zwischenvektor des jeweiligen Stützpunkts und dem Drivevektor des jeweiligen Stützpunkts bilden, was einen zweiten Zwischenvektor für den Stützpunkt ergibt und daran anschließend in einem dritten Schritt den ersten Zwischenvektor des jeweiligen Stützpunkts um den zweiten Zwischenvektor des jeweiligen Stützpunkts um den Betrag des jeweiligen Vorlaufwinkels zurückdrehen, was den Normalenvektor ergibt.

7. Vorrichtung nach Anspruch 6, **dadurch gekennzeichnet, dass** die Programmiereinrichtung (10) zur Programmierung der oder jeder Werkzeugbahn als CAD/CAM-System ausgebildet ist, wobei das CAD/CAM-System mindestens ein APT-File (11) erzeugt, welches von mindestens einem nachgeschalteten Postprozessor (15) in mindestens ein von der Fräsvorrichtung ausführbares NC-File (16) überführbar ist.

8. Vorrichtung nach Anspruch 6 oder 7, **dadurch gekennzeichnet, dass** die der Programmiereinrichtung (10) zugeordneten Mittel zur Umrechnung (14) aus dem vom CAD/CAM-System erzeugten ATP-File (11) für jeden Stützpunkt der Werkzeugbahn den Drivevektor und den Normalenvektor bestimmen, wobei die Mittel zur Umrechnung (14) den Normalenvektor in Form von ATP-Daten bereitstellen, und wobei diese ATP-Daten an einen APT-Prozessor (12) übergeben werden, der diese ATP-Daten und in ein maschinenunabhängige Steuerungsfile (13) derart integriert, dass in einer NC-Maschine (17), welche die eine 3D-Radiuskorrektur-Einrichtung umfasst, die 3D-Radiuskorrektur ausführbar ist.

## Claims

1. A method for milling freeform surfaces on workpieces, in particular for 5-axis milling, wherein a workpiece is milled by a tool or a milling cutter such that a desired freeform surface is produced, and wherein the tool is moved relative to the workpiece along at least one tool path or milling path, which is defined via support points, for milling, wherein a tool vector is defined in the form of lead angles and clearance angles for each support point of the tool path, and a normal vector is determined for each support point from the lead angles and clearance angles and from a drive vector established for each support point, wherein the drive vector defines the directional course of the support point path at the support point and the normal vector at each support point of the tool path is used for a 3D radius correction for compensating for dimensional deviations of the milling cutter, **characterised in that**, in order to establish the normal vector for each support point, in a first step the tool vector of the respective support point is turned back about the corresponding drive vector by the magnitude of the respective clearance angle, wherein this produces a first intermediate vector for the respective support point, and subsequently in a second step the cross product is formed from the first intermediate vector of the respective support point and the drive vector of the respective support point, wherein this cross product produces a second intermediate vector for the support point and, following this, in a third step the first intermediate vector of the respective support point is turned back about the second intermediate vector of the respective support point by the magnitude of the respective lead angle, wherein this produces the normal vector for the support point.

2. A method according to Claim 1, **characterised in that** the corresponding drive vector is established at each support point of the tool path by laying a vector through the support point and an adjacent support point.

3. A method according to Claim 2, **characterised in that** the drive vector is established for the first support point of the tool path by laying a vector through the first support point and the next support point lying forward in the direction of movement.

4. A method according to Claim 3, **characterised in that** the drive vector is established for each further support point of the tool path by laying a vector through the support point and the next support point lying rearward in the direction of movement.

5. A method according to Claim 1, **characterised in that** the corresponding drive vector is established at each support point of the tool path by laying a spline through all support points of the tool path, wherein the first derivative of the spline at a support point corresponds to the drive vector of the corresponding support point.

6. A device for milling freeform surfaces on workpieces, in particular a 5-axis milling device, wherein a tool or a milling cutter mills a workpiece in such a way that a desired freeform surface is produced, with a programming device (10) for programming at least one tool path or milling cutter path through support points, wherein the tool can be moved relative to the workpiece along the or each tool path for milling, wherein a tool vector in the form of lead angles and clearance angles can be programmed in the programming device (10) for each support point of the tool path, and means for conversion (14) are associated with the programming device (10) in order to determine a normal vector for each support point from the lead angles and clearance angles and from a drive vector established for each support point, wherein the drive vector defines the directional course of the support point path and the normal vector of each support point of the tool path is delivered to a 3D radius correction device for compensating for dimensional deviations of the milling cutter, **characterised in that**, in order to establish the normal vector for each support point, in a first step the means for conversion (14) turn the tool vector of the respective support point about the corresponding drive vector by the magnitude of the respective clearance angle, which produces a first intermediate vector for the respective support point, and subsequently form the cross product from the first intermediate vector of the respective support point and the drive vector of the respective support point, which produces a second intermediate vector for the support point and, following this, in a third step turn back the first intermediate vector of the respective support point about the second intermediate vector of the respective support point by the magnitude of the respective lead angle, which produces the normal vector.

7. A device according to Claim 6, **characterised in that** the programming device (10) is formed for programming the or each tool path as a CAD/CAM system, wherein the CAD/CAM system produces at least one APT file (11) which can be transferred by at least one post-processor (15) connected downstream into at least one NC file (16) which can be executed by the milling device.

8. A device according to Claim 6 or 7, **characterised in that** the means for conversion (14) associated with the programming device (10) determine the drive vector and the normal vector for each support point of the tool path from the ATP file (11) produced by the CAD/CAM system, wherein the means for conversion (14) provide the normal vector in the form of ATP data, and wherein these ATP data are delivered to an APT processor (12) which integrates these ATP data into a machine-independent control file (13) in such a way that the 3D radius correction can be executed in an NC machine (17) that contains a 3D radius correction device.

## Revendications

**1.** Procédé pour fraiser les surfaces de forme libre sur des pièces, notamment pour fraiser suivant cinq axes selon lequel

on fraise une pièce avec un outil ou une fraise pour obtenir la surface de forme libre souhaitée et

on déplace l'outil pour fraiser le long d'au moins une trajectoire d'outil ou une trajectoire de fraise par rapport à la pièce, passant par des points d'appui,

pour chaque point d'appui de la trajectoire de l'outil on définit un vecteur d'outil sous la forme d'angles d'avance et d'angles d'avancée et on définit un vecteur normal pour chaque point d'appui, à partir des angles d'avancée et des angles d'attaque ainsi qu'à partir d'un vecteur d'entraînement déterminé pour chaque point d'appui,

le vecteur d'entraînement définissant la direction de la trajectoire au point d'appui et le vecteur normal étant utilisé à chaque point d'appui de la trajectoire de l'outil pour une correction de rayon 3D, pour compenser les différences de dimension de la fraise,

**caractérisé en ce que**

pour déterminer le vecteur normal pour chaque point d'appui, dans une première étape on rétrograde le vecteur d'outil du point d'appui respectif suivant le vecteur d'entraînement correspondant, de la valeur de l'angle d'attaque respectif,

cela donne un premier vecteur intermédiaire pour le point d'appui respectif et ensuite, dans une seconde étape, on forme le produit croisé du vecteur intermédiaire du point d'appui respectif et du vecteur d'entraînement du point d'appui respectif,

ce produit croisé donnant un second vecteur intermédiaire pour le point d'appui et ensuite, dans une troisième étape, on rétrograde le premier vecteur intermédiaire du point d'appui respectif du second vecteur intermédiaire du point d'appui respectif, de la valeur de l'angle d'avance respectif,

ce qui donne le vecteur normal du point d'appui.

**2.** Procédé selon la revendication 1,
**caractérisé en ce qu'**
on détermine le vecteur d'entraînement correspondant à chaque point d'appui de la trajectoire de l'outil, en faisant
passer un vecteur par le point d'appui et par un point d'appui voisin.

**3.** Procédé selon la revendication 2,
**caractérisé en ce que**
pour le premier point d'appui de la trajectoire d'outil on détermine le vecteur d'entraînement en faisant passer un vecteur par le premier point d'appui et le point d'appui directement en amont dans le sens du mouvement.

**4.** Procédé selon la revendication 3,
**caractérisé en ce que**
pour chaque autre point d'appui de la trajectoire d'outil on détermine le vecteur d'entraînement pour qu'un vecteur passe par le point d'appui et le point d'appui situé directement en aval dans le sens du mouvement.

**5.** Procédé selon la revendication 1,
**caractérisé en ce qu'**
à chaque point d'appui de la trajectoire d'outil, on détermine le vecteur d'entraînement correspondant en disposant une courbe spline
par tous les points d'appui de la trajectoire de l'outil, la première dérivée de la courbe Spline en un point d'appui correspondant au vecteur d'entraînement du point d'appui correspondant.

**6.** Dispositif pour fraiser les surfaces de forme libre sur des pièces, notamment dispositif de fraise à cinq axes selon lequel, un outil ou une fraise travaille une pièce pour obtenir la surface de forme libre souhaitée, comprenant

une installation de programmation (10) pour programmer au moins une trajectoire d'outil ou de fraise par des points d'appui,

l'outil pour fraiser pouvant être déplacé le long de la ou de chaque trajectoire d'outil par rapport à la pièce, dans l'installation de programmation (10) on programme un vecteur d'outil sous la forme d'angle d'avance et d'angle d'attaque pour chaque point d'appui de la trajectoire d'outil et

on associe à l'installation de programmation (10) des moyens de conversion (14) pour déterminer pour chaque point d'appui un vecteur normal, à partir des angles d'avance et des angles d'attaque ainsi qu'à partir du vecteur d'entraînement déterminé de chaque point d'appui,

le vecteur d'entraînement définissant la direction du mouvement de la trajectoire d'appui et

le vecteur normal de chaque point d'appui de la trajectoire d'outil étant transmis à une installation de correction de rayon 3D pour compenser les déviations de dimension de la fraise,

**caractérisé en ce que**

les moyens pour convertir par calcul (14), pour déterminer le vecteur normal de chaque point d'appui tournant dans une première étape, le vecteur d'outil du point d'appui respectif autour du vecteur d'entraînement correspondant, de la valeur de l'angle d'attaque respectif, ce qui donne un premier vecteur intermédiaire pour le point d'appui respectif et ensuite on forme le produit croisé à partir du premier vecteur intermédiaire du point d'appui respectif et du vecteur d'entraînement du point d'appui respectif, ce qui donne un second vecteur intermédiaire pour le point d'appui et ensuite, dans une troisième étape, on rétrograde le premier vecteur intermédiaire du point d'appui respectif du second vecteur intermédiaire du point d'appui respectif, selon la valeur de l'angle d'avance respectif, donnant le vecteur normal.

7. Dispositif selon la revendication 6,
**caractérisé en ce que**
l'installation de programmation (10) est conçue pour programmer la ou chaque trajectoire d'outil sous la forme d'un système CAD/CAM, générant au moins un dossier APT (11) transféré par au moins un post-processeur (15) en aval dans au moins un dossier NC (16) que peut exécuter le dispositif de fraisage.

8. Dispositif selon la revendication 6 ou 7,
**caractérisé en ce que**
les moyens associés à l'installation de programmation (10) pour convertir par calcul (14) définissent le vecteur d'entraînement et le vecteur normal, à partir du dossier APT (11) généré par le système CAD /CAM, pour chaque point d'appui de la trajectoire de l'outil,
les moyens de conversion par calcul (14) fournissant le vecteur normal sous la forme de données ATP, et ces données ATP sont transférées à un processeur APT (12) qui les intègre dans un dossier de commande (13) indépendant de la machine de façon à pouvoir être exécutées dans une machine à commande numérique NC (17) qui comprend une installation de correction de rayon 3D, pour effectuer la correction de rayon 3D.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5563484 A